# EUROPÄISCHE PATENTSCHRIFT

(11) **EP 3 643 397 B1**
(45) Veröffentlichungstag und Bekanntmachung des Hinweises auf die Patenterteilung: **28.07.2021**
(21) Anmeldenummer: 19204971.6
(22) Anmeldetag: 23.10.2019
(51) Int. Cl.: B01F 5/06, B01F 15/02, A01J 11/16

(54) **VORRICHTUNG ZUM HOMOGENISIEREN EINES PRODUKTES UND VERWENDUNG DER VORRICHTUNG ZUM HOMOGENISIEREN EINES PRODUKTES**
DEVICE FOR HOMOGENIZING A PRODUCT AND USE OF THE DEVICE FOR HOMOGENIZING A PRODUCT
DISPOSITIF D'HOMOGÉNÉISATION D'UN PRODUIT ET UTILISATION DUDIT DISPOSITIF POUR L'HOMOGÉNÉISATION D'UN PRODUIT

(30) Priorität: 24.10.2018 DE 102018126444
(43) Veröffentlichungstag der Anmeldung: 29.04.2020
(73) Patentinhaber: Finnah Technologien GmbH, 49661 Cloppenburg (DE)
(72) Erfinder: Finnah, Josef, 49661 Cloppenburg (DE)
(74) Vertreter: Weidner Stern Jeschke

(56) Entgegenhaltungen:
- CN-Y- 2 593 888
- KR-A- 20160 044 438
- US-A- 2 172 661

## Beschreibung

Die Erfindung betrifft eine Vorrichtung zum Homogenisieren eines Produktes, wobei die Vorrichtung einen hydraulischen Antriebszylinder mit mindestens einer Kolbenstange und eine Homogenisierungseinrichtung aufweist, wobei beidseitig des hydraulischen Antriebszylinders jeweils ein Produktrohr und an beiden Enden der mindestens einen Kolbenstange jeweils ein in dem jeweiligen Produktrohr bewegbarer Produktkolben angeordnet sind, jedes Produktrohr einen Einlauf und einen Auslauf für das Produkt aufweist und die Homogenisierungseinrichtung hinter den beiden Ausläufen angeordnet ist.

Homogenisatoren werden seit Jahrzehnten in verschiedenen Industriebereichen eingesetzt, um flüssige bis pastöse Produkte durch eine Zerkleinerung der Bestandteile zu mischen und somit zu homogenisieren, welche bei der Produktion und/oder der Lagerung einer Entmischung unterliegen. Hierbei werden üblicherweise Drücke von 5 MPa bis über 100 MPa eingesetzt. Während für Homogenisatoren mit einem Druck von ≤ 10 MPa unter anderem Membranpumpen eingesetzt werden können, werden im höheren Druckbereich von > 10 MPa seit über 70 Jahren ausschließlich Kolbenantriebe verwendet. Bei einer derartigen Kolbenpumpe werden mittels eines Kurbeltriebes drei oder mehr Kolben angetrieben, an denen jeweils Produktkolben zum Fördern des Produktes und Aufbau des Druckes montiert sind. Hierbei weist der Kurbeltrieb üblicherweise eine Umdrehungsgeschwindigkeit von ca. 160 U/min auf, sodass sich bei drei bis sechs Kolben eine Hubfrequenz von 480 bis 960 Hübe/min ergeben.

Nachteilig ist hierbei zum einen, dass der Kurbeltrieb und die weiteren Bewegungselemente dementsprechend einen hohen Verschleiß unterliegen. Zum anderen sind beim Kurbeltrieb die Geschwindigkeiten und/oder Bewegungsrichtungen der Kolben im jeweiligen Bewegungsablauf ständig unterschiedlich. Dadurch entsteht eine pulsierende Wirkung, sodass die Homogenisatoren mit Kurbeltrieb Erschütterungen und Schwingungen unterliegen, welche sich auf die verbundenen Rohrleitungen und Anlagenteile, andere benachbarte Anlagen und das Gebäude übertragen. Dadurch beträgt die dynamische Bodenbelastung ein Vielfaches der statischen Bodenbelastung. Zur Verringerung der Erschütterungen werden Pulsationsdämpfer eingesetzt, welche jedoch nur eine Minderung der Erschütterung jedoch nicht der Schwingungen erzielen. Nachteilig ist, dass die Pulsationsdämpfer eine Aufwuchsfläche für Bakterien bieten und somit hygienische Probleme im Produkt und in der Produktion verursachen können.

Aus der US 2,172,661 A ist ein Homogenisierer für Milchprodukte bekannt, bei welchem das jeweilige Homogenisierungsventil direkt innerhalb des jeweiligen Homogenisierungszylinders angeordnet ist.

Die CN 2 593 888 Y beschreibt einen Hochdruck-Homogenisierer mit zwei Produktzylindern und einem mittigen Ölzylinder angetrieben von einer Pumpe, wobei in den Abläufen aus den beiden Produktzylindern ein Ventilkörper mit einem Homogenisierungsventil angeordnet ist.

Die KR 2016 0044438 A offenbart einen Homogenisierer mit einem Servoantriebsmodul und beidseitig angeordneten Kolbenmodulen.

Aufgabe der Erfindung ist es, den Stand der Technik zu verbessern.

Gelöst wird die Aufgabe durch eine Vorrichtung zum Homogenisieren eines Produktes, wobei die Vorrichtung einen hydraulischen Antriebszylinder mit mindestens einer Kolbenstange und eine Homogenisierungseinrichtung aufweist, wobei beidseitig des hydraulischen Antriebszylinders jeweils ein Produktrohr und an beiden Enden der mindestens einen Kolbenstange jeweils ein in dem jeweiligen Produktrohr bewegbarer Produktkolben angeordnet sind, jedes Produktrohr einen Einlauf und einen Auslauf für das Produkt aufweist und die Homogenisierungseinrichtung hinter den beiden Ausläufen angeordnet ist, wobei der hydraulische Antriebszylinder als ein doppeltwirkender Gleichlaufzylinder ausgebildet ist, sodass die mindestens eine Kolbenstange gleichartig in zwei entgegengesetzte Richtungen bewegbar ist, wobei durch eine Bewegung des jeweiligen Produktkolbens mittels der mindestens einen Kolbenstange ein Ausschieben des Produktes aus dem einen Produktrohr über dessen Auslauf und ein Aufnehmen des Produktes in das andere Produktrohr über dessen Einlauf erfolgt, und beim Ausschieben über den Auslauf das Produkt gegen einen Gegendruck der Homogenisierungseinrichtung derart gedrückt wird, dass ein Homogenisieren des Produktes erfolgt, und die Homogenisierungseinrichtung eine Kavitationseinrichtung und die Kavitationseinrichtung eine Vakuumeinrichtung aufweist, sodass am Auslass einer Entspannungskammer der Kavitationseinrichtung mittels der Vakuumeinrichtung ein Vakuum beim Abpumpen des homogenisierten Produktes ansetzbar ist.

Mittels des doppeltwirkenden Gleichlaufzylinders als linearer Antrieb und dessen wiederholten Wechseln der Bewegungsrichtung, sodass stets in dem einen Produktrohr Produkt aufgenommen, während aus dem anderen Produktrohr Produkt ausgeschoben wird, wird im Wesentlichen ein kontinuierlicher Ablauf des Produktes aus beiden Produktrohren mit einem hohen Druck zur Homogenisierungseinrichtung erzielt. Aufgrund der gleichartigen Bewegbarkeit der Kolbenstange in die beiden entgegengesetzten Richtungen und die gleichmäßige lineare Bewegung liegt ein ruhiger, erschütterungsfreier Bewegungsablauf und Druckaufbau vor. Somit treten im Gegensatz zum Stand der Technik bei der erfindungsgemäßen Vorrichtung kaum Erschütterungen, Vibrationen und/oder Schwingungen auf. Folglich werden mit der Vorrichtung verbundene Rohrleitungen, Anlagen und Gebäude nicht oder nur im geringen Maße belastet. Dementsprechend ist der Boden fast keinen dynamischen Belastungen ausgesetzt, da ein erschütterungsfreier gleichmäßiger Bewegungsablauf in der Vorrichtung zum Homogenisieren vorliegt. Zudem ist ein Einsatz von Pulsationsdämpfern nicht notwendig, sodass eine hygienische Belastung nicht auftritt und ein hygienisch einwandfreies Produkt homogenisiert wird.

Des Weiteren weist die erfindungsgemäße Vorrichtung eine geringere Baugröße und somit einen geringeren Platzbedarf und ein geringeres Gewicht im Vergleich zu bekannten Homogenisatoren auf.

Ein wesentlicher Gedanke der Erfindung ist, als Antriebseinheit und zum Aufbau eines hohen Druckes einen hydraulischen doppeltwirkenden Gleichlaufzylinder zu verwenden, wodurch ein gleichmäßiger und erschütterungsfreier Bewegungs- und Funktionsablauf erfolgt, um mit ausreichendem Druck das Produkt der nachfolgenden Homogenisierungseinrichtung zu zuführen.

Folgendes Begriffliche sei erläutert:
Unter "Homogenisieren" wird insbesondere ein Zerkleinern der Bestandteile eines flüssigen und/oder pastösen Produktes verstanden. Insbesondere werden beim Homogenisieren die Bestandteile von sich nicht mischenden Flüssigkeiten, beispielsweise Fett und Wasser, zerkleinert und vermischt. Beispielsweise werden beim Homogenisieren von Milch der mittlere Durchmesser der in der Milch vorhandenen Fettkügelchen von 10 bis 30 µm unter einem hohen Druck von 15 bis 30 MPa auf einen Durchmesser von 1 bis 10 µm verringert. Durch das Homogenisieren wird ein Produkt in seiner Konsistenz insbesondere stabilisiert und/oder standardisiert.

Bei einem "Produkt" handelt es sich insbesondere um ein halbfertiges, fertiges und/oder veredeltes Produkt in und/oder aus einem Herstellungsprozess. Bei einem Produkt kann es sich um ein Gemisch aus zwei Flüssigkeiten, einer Flüssigkeit und einem Feststoff und/oder Gas handeln. Ein Produkt wird insbesondere in der Lebensmittelindustrie, Milchindustrie, Pharma- und/oder Kosmetikindustrie hergestellt. Unter einem Produkt werden insbesondere alle pumpfähigen Produkte der Lebensmittelindustrie, Pharmazie und/oder Chemie verstanden.

Eine "Homogenisierungseinrichtung" ist insbesondere eine Einrichtung, in der ein Homogenisieren stattfindet. Eine Homogenisierungseinrichtung wird auch "Homogenisierer" und/oder "Homogenisator" genannt. Insbesondere findet in der Homogenisierungseinrichtung das eigentliche Zerkleinern und/oder Mischen des Produktes statt, sodass im Ablauf der Homogenisierungseinrichtung ein homogenisiertes Produkt vorliegt. Die Homogenisierungseinrichtung weist dazu insbesondere einen Druck von 5 bis 100 MPa, insbesondere von 10 bis 50 MPa, bevorzugt von 15 bis 35 MPa auf. Die Homogenisierungseinrichtung ist insbesondere eine passive Homogenisierungseinrichtung, das bedeutet, dass die Homogenisierungseinrichtung selbst keinen eigenen Antrieb aufweist. Somit ist die Homogenisierungseinrichtung insbesondere frei von einem selbstangetriebenen Rotor/Stator-System oder einem Ultraschallwandler.

Ein "hydraulischer Antriebszylinder" ist insbesondere ein mittels Flüssigkeit und/oder Gas betriebener Arbeitszylinder. Ein hydraulischer Antriebszylinder ist insbesondere ein Linearmotor. Mittels des hydraulischen Antriebszylinders wird die Energie aus der Hydraulikflüssigkeit, welche beispielsweise aus einem hydraulischen Druckspeicher oder einer Hydraulikpumpe geliefert wird, in eine einfach steuerbare, geradlinig wirkende Kraft umgesetzt. Ein hydraulischer Antriebszylinder ist insbesondere ein doppeltwirkender Gleichlaufzylinder.

Ein "doppeltwirkender Gleichlaufzylinder" weist auf beiden Seiten der Kolbenfläche eine Kolbenstange oder eine durchgehende Kolbenstange auf. Hierbei bedeutet "doppeltwirkend", dass die Kolbenfläche des Gleichlaufzylinders von beiden Seiten mit Hydraulikflüssigkeit beaufschlagbar ist. Bei einem doppeltwirkenden Gleichlaufzylinder ist entsprechend das Volumen der ein- und ausströmenden Hydraulikflüssigkeit immer gleich groß und folglich wird die Kolbenstange oder die Kolbenstangen mit derselben Geschwindigkeit ein- und ausgefahren. Dadurch ist die mindestens eine Kolbenstange gleichartig in zwei entgegengesetzte Richtungen, insbesondere mit derselben Geschwindigkeit und/oder demselben Geschwindigkeitsgradienten, bewegbar.

Eine "Kolbenstange" ist insbesondere ein Maschinenelement, welches einen Produktkolben im Gleichlaufzylinder führt. Zudem dichtet die Kolbenstange insbesondere den Druckraum des Gleichlaufzylinders, beispielsweise zusammen mit einer Stopfbuchse, gegen die Umgebung ab. Eine Kolbenstange kann auch als Plungerzylinder ausgebildet sein, sodass diese gleichzeitig als Kolben dient.

Ein "Produktkolben" ist insbesondere ein Kolben, welcher an einem Ende der mindestens einen Kolbenstange angeordnet ist und mit dem Produkt im Produktrohr in Kontakt tritt und/oder dieses komprimiert. Der Produktkolben bildet insbesondere mit dem umgebenden Produktrohr einen geschlossenen Hohlraum aus, dessen Volumen sich durch die Bewegung des Produktkolbens mittels der mindestens einen Kolbenstange ändert. Somit setzt der Produktkolben die Bewegungsenergie der Kolbenstange in Druckenergie beim Ausfahren des Produktkolbens in das Produktrohr um. Beim Ausfahren des Produktkolbens in das Produktrohr wird insbesondere das Produkt im Produktrohr komprimiert und unter hohem Druck über den Auslauf des Produktrohres der nachfolgend angeordneten Homogenisierungseinrichtung zugeführt. Währenddessen wird insbesondere im zweiten Produktrohr gleichzeitig der zweite Produktkolben eingefahren und somit das Volumen im Produktrohr vergrößert, sodass über den Einlauf Produkt in das zweite Produktrohr aufgenommen und/oder eingesaugt wird.

Ein "Produktrohr" ist insbesondere ein umgebendes Gehäuse mit einem Hohlraum, in dessen Volumen der Produktkolben bewegbar ist und das Produkt aufnehmbar ist. Bei einem Produktrohr handelt es sich insbesondere um ein rohrförmiges geschlossenes Gehäuse und bevorzugt um einen Zylinder.

Unter "Auslauf des Produktes gegen einen Gegendruck" wird verstanden, dass das Produkt in dem Produktrohr über den Auslauf nicht gegen die Atmosphäre ausgeschoben wird, sondern gegen ein weiteres Bauteil der erfindungsgemäßen Vorrichtung, insbesondere der Homogenisierungseinrichtung. Insbesondere ist der Druck am Auslauf des Produktes des hydraulischen Gleichlaufzylinders größer als ein Gegendruck der Homogenisierungseinrichtung.

Dass die Homogenisierungseinrichtung "hinter" den beiden Ausläufen angeordnet ist, bedeutet insbesondere, dass die Homogenisierungseinrichtung prozesstechnisch nach den beiden Ausläufen angeordnet ist. Hierbei muss die Homogenisierungseinrichtung nicht direkt räumlich hinter den Ausläufen angeordnet sein, sondern zwischen den Ausläufen und der Homogenisierungseinrichtung können weitere Bauteile wie Rohrleitung, Ventile etc. und/oder Vorrichtungsbestandteile angeordnet sein. Insbesondere ist die Homogenisierungseinrichtung im "Downstream" nach den Abläufen angeordnet.

In einer weiteren Ausführungsform der Vorrichtung weist der doppeltwirkende Gleichlaufzylinder eine durchgehende Kolbenstange oder zwei Kolbenstangen auf, wobei die beiden Kolbenstangen an gegenüberliegenden Seiten einer Kolbenfläche angeordnet sind.

Durch eine durchgehende Kolbenstange kann insbesondere die Anzahl der Bauteile der erfindungsgemäßen Vorrichtung weiter reduziert und somit die Verschleißanfälligkeit vermindert werden. Zudem werden durch eine durchgehende Kolbenstange der Gleichlauf und die gleichmäßige, gleichartige Bewegung sichergestellt.

Bei der "durchgehenden Kolbenstange" geht die Kolbenstange insbesondere durch die Kolbenfläche hin durch. Hierbei ist die Kolbenstange insbesondere in einer speziellen Form mit internen Bohrungen ausgestaltet, sodass die Flächenverhältnisse gleich sind und das Volumen der ein- und ausströmenden Hydraulikflüssigkeit immer gleich groß im hydraulischen Gleichlaufzylinder ist.

Um einen Betrieb der erfindungsgemäßen Vorrichtung frei von Erschütterungen und frei von Schwingungen zu realisieren, weist der doppeltwirkende Gleichlaufzylinder eine Hubfrequenz im Bereich von 3 bis 30 Hüben/min, insbesondere 8 bis 12 Hüben/min, bevorzugt mit 10 Hüben/min auf.

Somit wird ein Langsam- und/oder Langhub realisiert und aufgrund der niedrigen Hubfrequenz neben der Verminderung von Schwingungen und Erschütterungen eine hohe Lebensdauer der Vorrichtung erreicht.

In einer weiteren Ausführungsform weist der doppeltwirkende Gleichlaufzylinder eine Hublänge von 800 mm bis 1.200 mm, bevorzugt von 1.000 mm, auf.

Somit wird ein Langhub in jedem Produktkolben sowie ein gleichmäßiges Aufnehmen und Ausschieben des Produktes in den beiden gegenüberangeordneten Produktrohren realisiert. Folglich erfolgt aufgrund der Wechselschaltung mit einer abwechselnden, beständigen Bewegungsumkehr des hydraulischen Gleichlaufzylinders im Wesentlichen ein kontinuierlicher Ablauf aus beiden Produktrohren.

Hierzu weist jeder Produktkolben insbesondere einen Durchmesser von 40 bis 50 cm, bevorzugt von 45 cm, auf, sodass sich ein Produktvolumenstrom von 800 l/h bis 1.300 l/h, bevorzugt 1.000 l/h, ergibt.

Besonders bevorzugt, weist der doppeltwirkende Gleichlaufzylinder einen Produktvolumenstrom von 100 l/h bis 50.000 l/h auf. Für die verschiedenen Leistungen von 100 l/h bis 50.000 l/h verändern sich der Arbeitsdurchmesser des Produktrohres und Produktkolbens proportional zu den genannten Größen bei 1.000 l/h um die Frequenz beizubehalten.

Eine "Hubfrequenz" ist insbesondere die Anzahl der Hübe bezogen auf die Dauer der Zählung. Eine "Hublänge" ist insbesondere die Länge eines Hubes. Die Hublänge ist insbesondere das Ausmaß der linearen Bewegung des Produktkolbens.

Um das Aufnehmen und das Ausschieben des Produktes in und/oder aus dem jeweiligen Produktrohr zu steuern, weist der Einlauf mindestens ein Saugventil und der Auslauf mindestens ein Druckventil auf.

Somit können insbesondere die Druckverhältnisse am Ein- und Auslauf sowie das Komprimieren und Dekomprimieren in dem jeweiligen Produktrohr gesteuert und/oder geregelt werden.

Zudem kann das Produktrohr abgesperrt und/oder der Durchfluss des Produktes durch den Einlauf und/oder Auslauf gesteuert und/oder geregelt werden.

Bei einem "Saugventil" wird das Produkt durch das Saugventil hindurch insbesondere angesaugt, läuft in das Produktrohr ein und kann insbesondere nicht zurückfließen. Insbesondere entsteht beim Einziehen des Kolbens innerhalb des Produktrohres ein Unterdruck und das Saugventil öffnet, sodass das Produkt über den Einlauf in das Produktrohr einfließt. Hierbei hält das Saugventil insbesondere einen Unterdruck im Produktkolben aufrecht, bis der Produktkolben vollständig mit einlaufendem Produkt gefüllt ist.

Ein "Druckventil" behindert insbesondere den Durchfluss des Produktes in Abhängigkeit von Druck. Ein Druckventil regelt und/oder begrenzt insbesondere einen Druck oder schaltet in Abhängigkeit von einem Signaldruck. Bei einem Druckventil kann es sich insbesondere um ein Druckbegrenzungs-, Druckminderungs- und/oder Druckzuschaltventil handeln. Bei einem Druckventil handelt es sich insbesondere um ein Druckzuschaltventil, welches eine Leitung insbesondere solange absperrt, bis der an diesem Druckventil eingestellte Druck erreicht ist. Sobald der Einstelldruck erreicht ist, öffnet das Druckventil und das Produkt fließt ungehindert durch das Ventil.

Es ist besonders vorteilhaft, wenn das mindestens eine Saugventil und das mindestens eine Druckventil in einem Kompressionskopf am Ende des Produktrohres gegenüber dem Ende mit dem Gleichlaufzylinder zusammengefasst sind. Beispielsweise weist jeder Kompressionskopf am Ende jedes Produktrohres jeweils zwei Saugventile für den Einlauf und zwei Druckventile für den Auslauf auf.

In einer weiteren Ausführungsform der Vorrichtung weist oder weisen das Saugventil und/oder das Druckventil einen Ventilkolben mit einer Druckbeaufschlagung und mit einem Durchlass auf einer Ventilinnenseite auf, sodass bei Aufbringen eines Gegendruckes größer der Druckbeaufschlagung auf der Ventilinnenseite der Kolben mit dem Durchlass auf eine Ventilaußenseite verschoben wird.

Hierbei kann ein Aufbringen eines Gegendruckes entgegen der Druckbeaufschlagung sowohl durch Aufbringen eines Druckes als auch durch Aufbringen eines Saugdruckes überwunden werden.

Zudem ist es vorteilhaft, dass der Ventilkolben eine Schneidkante aufweist, sodass jeweils eine definierte Ventilstellung für das Ansaugen/Ausschieben des Produktes, das Schneiden/Trennen sowie das Abdichten des Ventils mittels der Bewegung der Schneidkante erfolgt.

Um einen schnellen Wechsel der Bewegungsrichtung des Gleichlaufzylinders und ein schnelles Aufnehmen und Ausschieben des Produktes zu realisieren, ist oder sind das Saugventil und/oder das Druckventil direkt am ersten Produktrohr und/oder am zweiten Produktrohr angeordnet.

In einer weiteren Ausführungsform der Vorrichtung ist das jeweilige Saugventil am und/oder im ersten Produktkolben und/oder am und/oder im zweiten Produktkolben angeordnet.

Dadurch führt der Einlauf für das Produkt direkt zum jeweiligen Produktkolben mit dem Saugventil. Es ist besonders vorteilhaft, dass das Saugventil für das Einlassen des Produktes in das entsprechende Produktrohr durch die Bewegung des entsprechenden Produktkolbens zum Ausschieben des Produktes direkt geschlossen wird. Hierbei wird durch Bewegen des Produktkolbens ein Gegendruck aufgebracht, welcher größer der Druckbeaufschlagung der Ventilinnenseite des Ventilkolbens des Saugventils ist und somit wird der Durchlass des Saugventils in eine Geschlossenstellung verschoben. Folglich schiebt das Saugventil des Produktkolbens als Einlassventil direkt auf das Druckventil als Auslassventil des jeweiligen Produktrohres.

Um mit geringer Baugröße und in einfacher Funktionsweise das eigentliche Homogenisieren des Produktes durchzuführen, weist die Homogenisierungseinrichtung ein Homogenisierungsventil auf.

Somit wird mittels des Homogenisierungsventils ein effizientes Homogenisieren des Produktes insbesondere frei von einem zusätzlichen Energieeintrag realisiert. Aufgrund des gleichmäßigen Ausschiebens des Produktes aus dem doppeltwirkender Gleichlaufzylinder erfolgt mittels der Homogenisierungseinrichtung und/oder dem Homogenisierungsventil eine sehr gleichmäßige Homogenisierung des Produktes auch über längere Zeiträume.

In einer weiteren Ausführungsform weist das Homogenisierungsventil eine Pralleinrichtung, insbesondere einen Prallring, auf, sodass durch ein Auftreffen desausgeschobenen Produktes auf die Pralleinrichtung ein Homogenisieren und/oder ein Mischen erfolgt.

Es ist besonders vorteilhaft, dass in dem Homogenisierungsventil gleichzeitig ein Homogenisieren des Produktes und ein Mischen der abwechselnd anfallenden Produktströme aus den beiden Ausläufen der beiden Produktrohre erfolgt, sodass ein homogenisierter kontinuierlicher Ablauf des homogenisierten Produktes aus dem Homogenisierungsventil erfolgt.

Ein "Homogenisierungsventil" ist insbesondere ein Ventil mit einem engen Strömungskanal oder mehreren engen Strömungskanälen, durch welche das Produkt unter hohem Druck gepresst wird, sodass durch die wirkenden Gravitationskräfte eine Zerkleinerung und Homogenisierung des Produktes erfolgt. Zusätzlich kann das Homogenisierungsventil eine Pralleinrichtung, wie eine Prallplatte, eine Prallscheibe und/oder einen Prallring, aufweisen, sodass durch Auftreffen des Produktes unter hohem Druck auf die Pralleinrichtung die Bestandteile des Produktes zerkleinert werden und somit eine Homogenisierung erfolgt. Im Homogenisierungsventil treten insbesondere Scher-/Dehnkräfte, Prallströmungen und/oder Kavitationen auf. Das Homogenisierungsventil weist insbesondere unterschiedliche Strömungsgeschwindigkeiten und/oder Druckstufen auf.

Selbstverständlich können auch mehrere doppeltwirkende Gleichlaufzylinder parallel in der erfindungsgemäßen Vorrichtung angeordnet sein, wobei gleiche oder unterschiedliche Hubfrequenzen und/oder Wechselfrequenzen der Bewegungsrichtung in den einzelnen doppeltwirkenden Gleichlaufzylindern gezielt einsetzbar sind, um eine weitere Vergleichmäßigung der druckbeaufschlagten Abläufe und eine im Wesentlichen schwingungsarme Vorrichtung zu erzielen. Somit kann beispielsweise durch einen Parallelbetrieb von zwei doppeltwirkenden Gleichlaufzylindern eine Verdoppelung des zu einer einzigen Homogenisierungseinrichtung geförderten Volumenstroms des Produktes und somit der Menge des homogenisierten Produktes erreicht werden.

In einer weiteren Ausführungsform der Vorrichtung ist das Homogenisierungsventil als Druckventil ausgebildet, sodass das Homogenisierungsventil das jeweilige Druckventil ersetzt.

Somit übernimmt das Homogenisierungsventil sowohl die Funktion der Homogenisierung des Produktes als auch die des Druckventils am Auslauf. Folglich werden diese beiden Funktionen durch ein einziges Bauteil realisiert. Dadurch wird die Baugröße der Vorrichtung reduziert, da weniger Ventile eingesetzt werden müssen und Rohrleitungen eingespart werden können.

Es ist besonders vorteilhaft, wenn jeweils ein Homogenisierungsventil als Druckbeaufschlagungsventil direkt am Auslauf des jeweiligen Produktrohres angeordnet ist. Hierzu werden an den beiden Produktrohren zwei kleinere Homogenisierungsventile angeordnet, statt einem größeren Homogenisierungsventil nach Zusammenführen der beiden Ausläufe aus den beiden Produktrohren. Folglich liegt bei der Ausgestaltung des Homogenisierungsventils als Druckventil direkt nach dem Auslauf aus dem jeweiligen Produktrohr bereits das homogenisierte Produkt vor.

Bevorzugt weist das Homogenisierungsventil ausgebildet als Druckventil eine Gegendruckstelleinrichtung, beispielsweise einen Druckhaltezylinder auf, um den erforderlichen Homogenisierungsdruck zu gewährleisten. Dazu schiebt beispielsweise der Druckhaltezylinder in das Homogenisierungsventil rein, um den Homogenisierungsdruck konstant bei beispielsweise 20 MPa zu halten. Ebenso bewirkt der Druckhaltezylinder, dass das Homogenisierungsventil erst bei Erreichen des vorgegebenen Mindestdruckes als Druckhalteventil öffnet.

Die Homogenisierungseinrichtung weist eine Kavitationseinrichtung auf.

Somit erfolgt das Homogenisieren des Produktes in der Homogenisierungseinrichtung mittels einer Kavitationseinrichtung.

Hierbei kann die Kavitationseinrichtung direkt an jedem Auslauf eines Produktrohres oder nach Vermischen der beiden Produktströme der Ausläufe aus den beiden Produktrohren angeordnet sein.

Die Kavitationseinrichtung weist bevorzugt als Einlass mindestens ein Verbindungsstück auf, welches einen Kavitationskanal mit einem geringen Durchmesser zum Zuführen des Produktes in eine Entspannungskammer der Kavitationseinrichtung aufweist. Der Kavitationskanal, welcher beispielsweise als Bohrung ausgeführt sein kann, weist insbesondere einen Durchmesser in einem Bereich von 1 mm bis 5 mm, insbesondere in einem Bereich von 2 mm bis 3 mm, bevorzugt von 2 mm, auf.

Des Weiteren weist das Verbindungsstück einen Bypasskanal auf, welcher einen größeren Durchmesser als der Kavitationskanal aufweist, um das Produkt beim Anfahren der Vorrichtung Anlage und/oder ein Reinigungsmittel durch den Bypasskanal zu führen.

Der Bypasskanal weist einen Durchmesser in einem Bereich von 5 mm bis 25 mm, insbesondere von 10 mm bis 20 mm, bevorzugt von 15 mm, auf.

Der Kavitationskanal und der Bypasskanal des Verbindungsstückes werden entsprechend des Betriebes jeweils wechselseitig, beispielsweise mittels eines Ventils, verschlossen.

Bevorzugt weist die Kavitationseinrichtung nicht nur ein Verbindungsstück, sondern mehrere modulare Verbindungsstücke unterschiedlicher und/oder gleicher Länge mit dem entsprechenden Kavitationskanal und/oder Bypasskanal auf, sodass entsprechend den Anforderungen der Homogenisierungsgrad des Produktes durch Aneinandersetzen der modularen Verbindungsstücke anpassbar ist. Beispielsweise kann durch Herausnahme eines oder mehrerer der modularen Verbindungsstücke bei einem Produktwechsel der Homogenisierungsgrad vermindert werden.

Die modularen Verbindungsstücke als Einlass zur Kavitationseinrichtung sind gegeneinander verspannt, beispielsweise mittels Spannschrauben, sodass die Anzahl und somit die Länge der Verbindungsstücke durch Öffnen der Spannschrauben und Hinzufügen oder Entnehmen eines oder mehrerer modularen Verbindungsstücke angepasst werden kann.

Zusätzlich wird bevorzugt am Auslass der Entspannungskammer der Kavitationseinrichtung mittels einer Vakuumeinrichtung ein Vakuum beim Abpumpen des homogenisierten Produktes angesetzt.

Eine "Kavitationseinrichtung" ist insbesondere eine Einrichtung, durch welche eine Bildung und Auflösung von dampfgefüllten Hohlräumen (Dampfblasen) im Produkt und dadurch eine Homogenisierung erfolgt. Eine Kavitationseinrichtung weist insbesondere einen Kavitationskanal, eine Entspannungskammer und/oder eine Vakuumeinrichtung auf. Aufgrund des geringen Durchmessers des Kavitationskanals und somit der sehr hohen Strömungsgeschwindigkeit im Kavitationskanal, bilden sich Dampfblasen, welche anschließend in der Entspannungskammer aufgrund des plötzlichen Druckabfalls bedingt durch die Querschnittserweiterung in der größeren Entspannungskammer im Vergleich zum Durchmesser des Kavitationskanals schlagartig kollabieren und somit zu einer Homogenisierung des Produktes führen.

Um das Aufnehmen und Ausschieben des Produktes sowie die Bauteile der Vorrichtung zu steuern und/oder zu regeln, weist die Vorrichtung eine Steuer- und/oder Regeleinrichtung auf.

In einer "Steuer- und/oder Regeleinrichtung" werden insbesondere erfasste, aufbereitete und/oder ausgewertete Daten zur Beeinflussung des Antriebs durch den hydraulischen Gleichlaufzylinder, der Homogenisierungseinrichtung und/oder der gesamten erfindungsgemäßen Vorrichtung verwendet. Hierbei ist eine "Steuerung" insbesondere eine Vorgabe, nach welcher die in der Vorrichtung vorkommenden veränderlichen, dynamischen Größen beeinflusst werden. Durch eine Steuerung wird insbesondere in Abhängigkeit von einer Eingangsgröße eine Ausgangsgröße eingestellt. Eine "Regelung" ist insbesondere eine gezielte Beeinflussung einer Größe in der Vorrichtung, wobei diese Größe entweder konstant zu halten ist (Festwertregelung) oder so zu beeinflussen ist, dass diese insbesondere einer vorgegebenen zeitlichen Änderung folgt (Folgeregelung). Eine Regelung umfasst insbesondere das Messen der zu beeinflussenden Größe (Regelgröße) und kontinuierliches Vergleichen mit dem Sollwert, sodass eine Rückkopplung der Ausgangsgröße auf den Eingang erfolgt.

In einer weiteren Ausführungsform der Vorrichtung ist das Produkt eine Flüssigkeit, eine Suspension und/oder eine Dispersion.

Somit ist die Vorrichtung auch derart eingerichtet, dass im Falle einer Suspension als Produkt, beispielsweise eines Quarks mit Pfefferkörnern, auch die Pfefferkörner durch das Homogenisieren feinstverteilt werden können. Ebenso können durch die Vorrichtungen auch Dispersionen als heterogenes Gemisch aus mindestens zwei Phasen, beispielsweise eine Wasser-in-Öl-Emulsion oder eine Öl-in-Wasser-Emulsion sowie Schäume homogenisiert werden.

In einem weiteren Aspekt wird die Aufgabe gelöst durch eine Verwendung einer zuvor beschriebenen Vorrichtung zum Homogenisieren eines Produktes, insbesondere eines Lebensmittels, sodass ein gleichmäßig homogenisiertes Produkt vorliegt.

Durch Verwenden der erfindungsgemäßen Vorrichtung zum Homogenisieren eins Produktes kann erstmalig seit über 70 Jahren das Homogenisieren insbesondere unter Hochdruck vergleichmäßigt fast ohne Erschütterungen und/oder Schwingungen erfolgen. Folglich ist bei der Verwendung ein Einsatz von Pulsationsdämpfern nicht erforderlich und somit kann ein mikrobiologisch einwandfreies, homogenisiertes Produkt erzielt werden.

Zudem wird durch das Verwenden der Vorrichtung eine kontinuierliche, gleichmäßige Homogenisierung des Produktes erzielt.

Im Weiteren wird die Erfindung anhand eines Ausführungsbeispiels näher erläutert. Es zeigt die einzige
- Figur 1: eine stark schematische Schnittdarstellung eines hydraulischen LanghubHomogenisierers,
- Figur 2: eine stark schematische Schnittdarstellung eines hydraulischen LanghubHomogenisierers mit Homogenisierungsventilen als Druckventilen, und
- Figur 3: eine stark schematische Schnittdarstellung einer Kavitationshomogenisierungseinrichtung eines hydraulischen LanghubHomogenisierers.

Ein hydraulischer Langhub-Homogenisierer 101 weist einen doppeltwirkenden Gleichlaufzylinder 103 mit einer durchgehenden Kolbenstange 105 und ein nachgeschaltetes Homogenisierungsventil 127 auf. Der doppeltwirkende Gleichlaufzylinder 103 ist in einer nicht gezeigten Aufnahmekonstruktion montiert. An der durchgehenden Kolbenstange 105 ist eine beidseitig beaufschlagbare Kolbenfläche 137 angeordnet, welche jeweils über eine Hydraulikflüssigkeitszufuhr 129 auf jeder Seite mit Hydraulikflüssigkeit beaufschlagt werden kann. Dadurch weist der doppeltwirkende Gleichlaufzylinder 103 zwei gleichartige Bewegungsrichtungen der durchgehenden Kolbenstange 105 auf. Die Hydraulikflüssigkeit wird von einer nicht näher gekennzeichneten Hydraulikpumpe geliefert.

Die durchgehende Kolbenstange 105 weist an ihren beiden Enden einen ersten Kolben 107 und einen zweiten Kolben 109 auf. Beidseitig an dem doppeltwirkenden Gleichlaufzylinder 103 ist ein erstes Produktrohr 111 und ein zweites Produktrohr 113 angeordnet, wobei der erste Kolben 107 mittels der durchgehenden Kolbenstange 105 beweglich im ersten Produktrohr 111 sowie der zweite Kolben 109 mittels der durchgehenden Kolbenstange 105 beweglich im zweiten Produktrohr 113 sind.

Das erste Produktrohr 111 und das zweite Produktrohr 113 weisen jeweils einen Einlauf 115 und einen Auslauf 117 auf. An dem jeweiligen Einlauf 115 ist jeweils ein Saugventil 123 und an dem jeweiligen Auslauf 117 jeweils ein Druckventil 125 angeordnet.

Die beiden Ausläufe 117 aus dem ersten Produktrohr 111 und dem zweiten Produktrohr 113 sind über den ersten Zulauf 131 und den zweiten Zulauf 133 gemeinsam mit dem Homogenisierungsventil 127 verbunden. Das Homogenisierungsventil 127 weist einen Ablauf 135 für das homogenisierte Produkt auf.

Der doppeltwirkende Gleichlaufzylinder 103 weist eine Hublänge von 1.000 mm und eine Hubfrequenz von 10 Hüben/min auf. Der erste Kolben 107 und der zweite Kolben 109 haben jeweils einen Durchmesser von 45 cm. Mit dem doppeltwirkenden Gleichlaufzylinder 103 wird ein mittlerer Produktvolumenstrom von 1.000 l/h gefördert.

Das Homogenisierungsventil 127 weist einen Druck von 220 bar und einen Produktvolumenstrom von 300 m/s auf.

Der hydraulische Langhub-Homogenisierer 101 wird zur Homogenisierung von Milch eingesetzt.

Folgende Verwendungs- und Arbeitsvorgänge werden mit dem hydraulischen Langhub-Homogenisierer 101 realisiert.

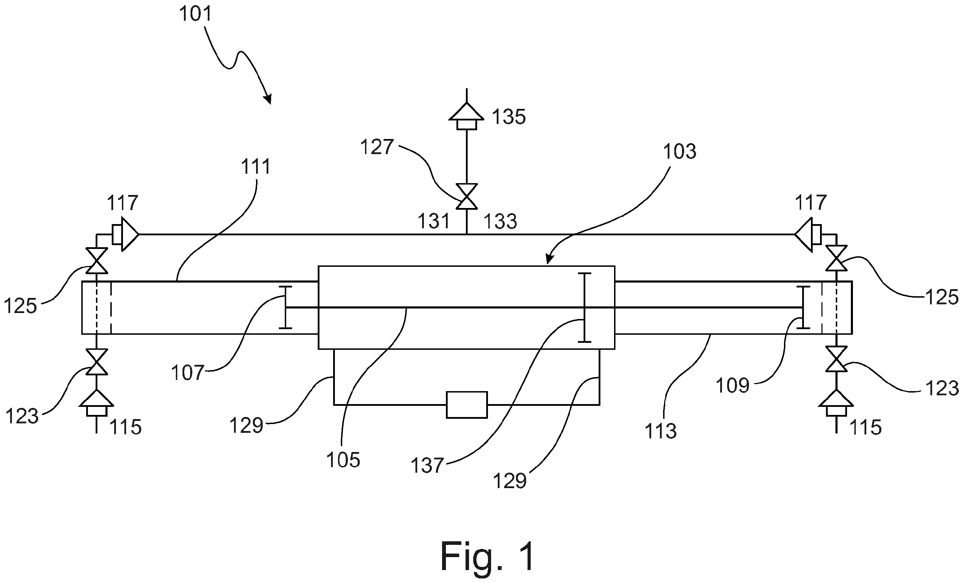

Mittels der nicht gezeigten Hydraulikpumpe wird Hydraulikflüssigkeit über die Hydraulikflüssigkeitszufuhr 129 auf die in Figur 1 gezeigte linke Seite der Kolbenfläche 137 zugeführt. Dadurch wird die Kolbenfläche 137 mit der angeordneten durchgehenden Kolbenstange 105 zum rechten Ende des doppeltwirkenden Gleichlaufzylinders 103 verschoben und Milch in das erste Produktrohr 111 eingesaugt. Gleichzeitig wird der zweite Kolben 109 in das bereits mit Milch befüllte zweite Produktrohr 113 verschoben. Somit wird kontinuierlich sich bereits im zweiten Produktrohr 113 befindliche Milch über das Druckventil 125, über den Auslauf 117 und den zweiten Zulauf 133 mit einem hohen Druck von 25 MPa in das Homogenisierungsventil gedrückt.

Gleichzeitig zum Ausschieben der Milch aus dem zweiten Produktrohr 113 erfolgt im ersten Produktrohr 111 aufgrund der gleichmäßigen Bewegung des ersten Kolbens 107 in Richtung auf den doppeltwirkenden Gleichlaufzylinder 103 ein Aufnehmen von Milch über das Saugventil 123 des ersten Produktrohres 111, bis das erste Produktrohr 111 vollständig mit Milch gefüllt ist. Nach 6 Sekunden wird die Bewegungsrichtung des doppeltwirkenden Gleichlaufzylinders 103 umgekehrt, indem die Hydraulikflüssigkeit nun auf die rechte Seite der Kolbenfläche 137 des doppeltwirkenden Gleichlaufzylinders 103 zugeführt wird. Daraufhin bewegt sich die Kolbenfläche 137 mit der angeordneten durchgehenden Kolbenstange 105 auf die linke Seite des doppeltwirkenden Gleichlaufzylinders 103, wodurch die aufgenommene Milch im ersten Produktrohr 111 durch das Ausfahren des Kolbens 107 über das Druckventil 125 des ersten Produktrohres 111, den Auslauf 117 und den zweiten Zulauf 133 mit einem hohen Druck von 25 MPa ausgeschoben wird und in das Homogenisierungsventil 127 gelangt. Zeitgleich fährt in umgekehrter Richtung der zweite Kolben 109 zum doppeltwirkenden Gleichlaufzylinder 103 zurück, sodass über den Einlauf 115 des zweiten Produktrohres 113 wieder neue Milch in das zweite Produktrohr 113 aufgenommen wird.

Diese Vorgänge werden kontinuierlich mit einer Hubfrequenz von 10 Hüben/min wiederholt.

Entsprechend gelangt über den ersten Zulauf 131 und den zweiten Zulauf 133 quasi kontinuierlich Milch mit dem sehr hohen Druck von 25 MPa in das Homogenisierungsventil 127. Durch nicht gezeigte Bohrungen und Spalte wird die druckbeaufschlagte Milch vorhomogenisiert, bevor diese mit 220 bar und einer Geschwindigkeit von 300 m/s auf einen Prallring prallt, wodurch eine Öltröpfchengröße in der Milch von einer Größe zwischen 10 und 30 µm auf einen mittleren Tropfendurchmesser von 1 bis 2 µm reduziert und somit die Milch homogenisiert wird. Gleichzeitig wird durch eine Strömungsführung im Homogenisierungsventil 127 die Milch, welche über den ersten Zulauf 131 und den zweiten Zulauf 133 in das Homogenisierungsventil 127 gedrückt wird, vermischt. Die so vermischte und homogenisierte Milch verlässt das Homogenisierungsventil 127 über den Ablauf 135.

Somit wird der hydraulische Langhub-Homogenisierer 101 zum Homogenisieren von Milch verwendet, ohne dass aufgrund des gleichmäßigen und kontinuierlichen Antriebs- und der Druckförderung der Milch mittels des doppelt wirkenden Gleichlaufzylinders 103 eine Beeinträchtigung des hydraulischen Langhub-Homogenisierers 101 sowie damit verbundenerer Bauteile und eines Gebäudes durch Erschütterung und Schwingungen auftritt. Zudem wird durch Verwenden des hydraulischen Langhub-Homogenisierers 101 eine geringe Baugröße und ein geringes Gewicht realisiert und eine biologische Kontamination der homogenisierten Milch vermieden.

In einer nicht gezeigten Alternative des hydraulischen Langhub-Homogenisierers 101 sind die beidseitigen Einläufe 115 und das jeweilige Saugventil 123 nicht außen wie in Figur 1 gezeigt am ersten Produktrohr 111 und zweiten Produktrohr 113 angeordnet, sondern jeder Einlauf 115 führt direkt zum ersten Kolben 107 und zum zweiten Kolben 109, wobei im ersten Kolben 107 und im zweiten Kolben 109 jeweils ein Saugventil 123 angeordnet ist. Somit wird über das jeweilige Saugventil 123 angeordnet im ersten Kolben 107 und zweiten Kolben 109 entsprechend direkt das erste Produktrohr 111 oder das zweite Produktrohr 113 wechselseitig mit Produkt gefüllt. Nach Befüllen des ersten Produktrohrs 111 mit Produkt über das im ersten Kolben 107 angeordnete Saugventil 123 wird der erste Kolben 107 in Richtung des Auslaufes 117 verschoben und dadurch direkt das Saugventil 123 im ersten Kolben 107 verschlossen und nachfolgend das Produkt im ersten Produktrohr 111 über das entsprechende Druckventil 125 aus dem ersten Produktrohr 111 ausgeschoben. Entsprechend wird beim zweiten Produktrohr 113 verfahren.

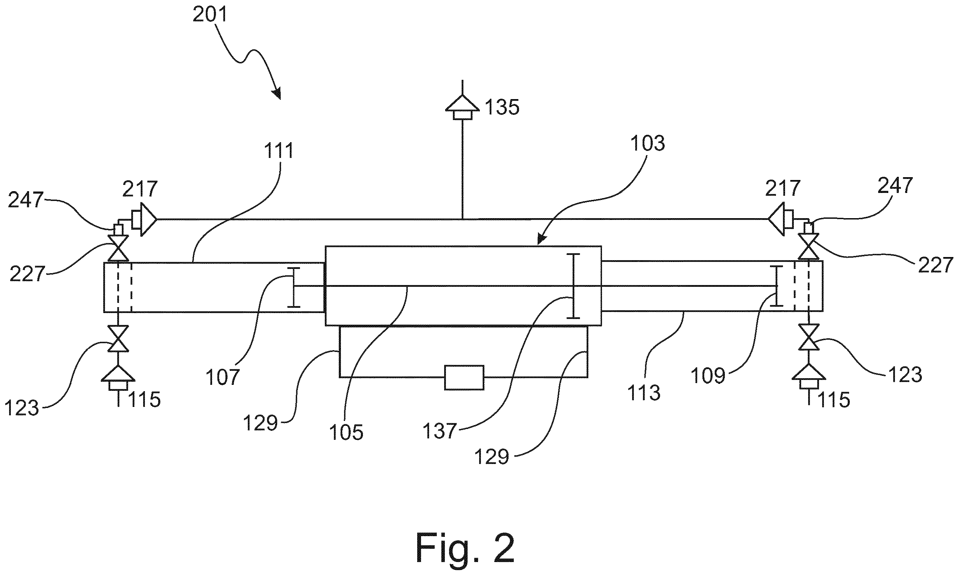

In einer weiteren Alternative weist ein hydraulischer Langhub-Homogenisierer 201 (Figur 2) am ersten Produktrohr 111 und zweiten Produktrohr 113 jeweils ein Homogenisierungsventil 227 auf, welches als Druckventil ausgebildet und jeweils direkt am ersten Produktrohr 111 und am zweiten Produktrohr 213 angeordnet ist. Ansonsten ist der hydraulischer Langhub-Homogenisierer 201 wie oben beschrieben eingerichtet.

Das Homogenisierungsventil 227 weist jeweils einen Gegendruckzylinder 247 auf, um ein Öffnen des Homogenisierungsventils 227 erst bei einem vorgegebenen Mindestdruck und ein Konstanthalten eines Homogenisierungsdruckes zu gewährleisten.

Der hydraulische Langhub-Homogenisierer 201 wird, wie oben beschrieben, betrieben. Da das Homogenisierungsventil 227 jeweils direkt als Druckhalteventil am ersten Produktrohr 111 und am zweiten Produktrohr 113 angeordnet ist, erfolgt beim Ausschieben des Produktes aus dem jeweiligen Produktrohr 111 oder 113 direkt das Homogenisieren des Produktes durch das jeweilige Homogenisierungsventil 227, sodass im Auslauf 217 des hydraulischen Langhub-Homogenisierers 201 hinter dem jeweiligen Produktrohr 111 oder 113 direkt das homogenisierte Produkt vorliegt.

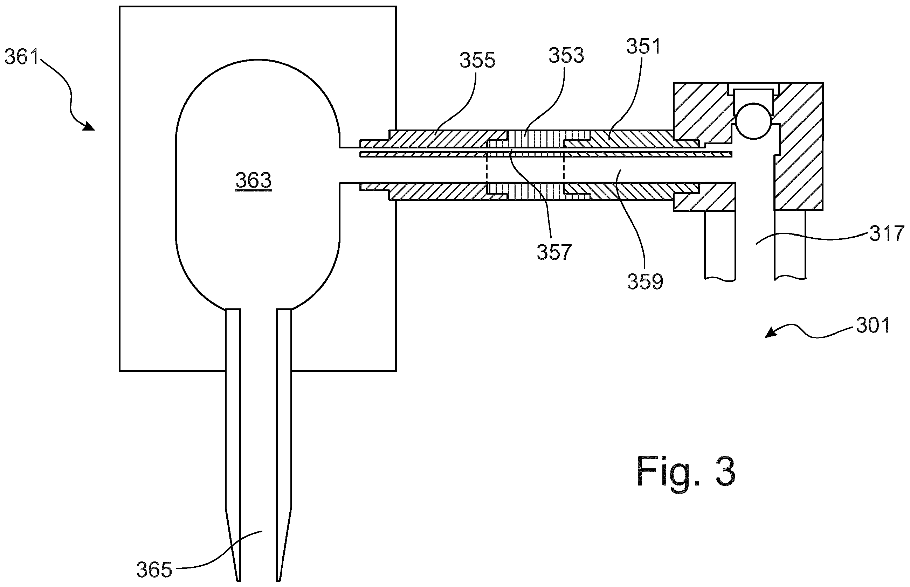

In einer weiteren Alternative weist ein hydraulischer Langhub-Homogenisierer 301 (in Figur 3 nur mit seinem Auslass 317 gezeigt) anstelle eines Homogenisierungsventils eine Kavitationshomogenisierungseinrichtung 361 auf. Die Kavitationshomogenisierungseinrichtung 361 ist mit dem Auslass 317 des hydraulischen Langhub-Homogenisierers 301 verbunden. Die Kavitationshomogenisierungseinrichtung 361 weist als Einlass ein erstes Verbindungsmodulstück 351, ein zweites Verbindungsmodulstück 353 und ein drittes Verbindungsmodulstück 355 auf, welche gegeneinander mittels nicht gezeigter Spannschrauben verspannt sind. In den drei Verbindungsmodulstücken 351, 353 und 355 sind jeweils ein Kavitationskanal 357 und ein Bypasskanal 359 durchgehend geführt. Der Kavitationskanal 357 und der Bypasskanal 359 des dritten Verbindungsmodulstückes 355 enden in einer Entspannungskammer 363. Am Auslass der Entspannungskammer 363 ist eine Vakuumeinrichtung 365 angeordnet.

Der Kavitationskanal 357 weist einen Durchmesser von 2 mm und der Bypasskanal 359 einen Durchmesser von 15 mm auf.

Beim Anfahren des hydraulischen Langhub-Homogenisierers 301 wird zunächst das ausgeschobene Produkt aus einem der beiden Produktrohre durch den Bypasskanal 359 in die Entspannungskammer 363 geführt. Anschließend wird für einen normalen Betrieb zum Homogenisieren der Bypasskanal 359 verschlossen und der Kavitationskanal 357 geöffnet, sodass das ausgeschobene Produkt mit einer sehr hohen Geschwindigkeit durch den Kavitationskanal 357 gedrückt wird, wodurch es zur Dampfblasenbildung im Produkt kommt. Aufgrund einer Querschnittserweiterung in der Entspannungskammer 363 im Vergleich zum sehr dünnen Kavitationskanal 357 kommt es zu einem schlagartigen Druckabfall und somit zu einem Kollabieren der gebildeten Dampfblasen in der Entspannungskammer 363, wodurch ein Homogenisieren des Produktes erfolgt. Das Homogenisieren wird zusätzlich dadurch verbessert, dass mittels der Vakuumeinrichtung 365 am Auslass der Entspannungskammer 363 ein Vakuum beim Abpumpen des homogenisierten Produktes angesetzt wird.

### Bezugszeichenliste

- 101: Hydraulischer Langhub-Homogenisierer
- 103: doppeltwirkender Gleichlaufzylinder
- 105: durchgehende Kolbenstange
- 107: erster Kolben
- 109: zweiter Kolben
- 111: erstes Produktrohr
- 113: zweites Produktrohr
- 115: Einlauf
- 117: Auslauf
- 123: Saugventil
- 125: Druckventil
- 127: Homogenisierungsventil
- 129: Hydraulikflüssigkeitszufuhr
- 131: erster Zulauf zum Homogenisierungsventil
- 133: zweiter Zulauf zum Homogenisierungsventil
- 135: Ablauf des homogenisierten Produktes
- 137: Kolbenfläche
- 201: Hydraulischer Langhub-Homogenisierer
- 217: Auslauf des homogenisierten Produktes
- 227: Homogenisierungsventil
- 247: Gegendruckzylinder
- 301: Hydraulischer Langhub-Homogenisierer
- 317: Auslass
- 351: erstes Verbindungsmodulstück
- 353: zweites Verbindungsmodulstück
- 355: drittes Verbindungsmodulstück
- 357: Kavitationskanal
- 359: Bypasskanal
- 361: Kavitationshomogenisierungseinrichtung
- 363: Entspannungskammer
- 365: Vakuumeinrichtung

## Patentansprüche

1. Vorrichtung (101) zum Homogenisieren eines Produktes, wobei die Vorrichtung einen hydraulischen Antriebszylinder mit mindestens einer Kolbenstange (105) und eine Homogenisierungseinrichtung (127) aufweist, wobei beidseitig des hydraulischen Antriebszylinders jeweils ein Produktrohr (111, 113) und an beiden Enden der mindestens einen Kolbenstange jeweils ein in dem jeweiligen Produktrohr bewegbarer Produktkolben (107, 109) angeordnet sind, jedes Produktrohr einen Einlauf (115) und einen Auslauf (117) für das Produkt aufweist und die Homogenisierungseinrichtung hinter den beiden Ausläufen angeordnet ist, wobei der hydraulische Antriebszylinder als ein doppeltwirkender Gleichlaufzylinder (103) ausgebildet ist, sodass die mindestens eine Kolbenstange gleichartig in zwei entgegengesetzte Richtungen bewegbar ist, wobei durch eine Bewegung des jeweiligen Produktkolbens mittels der mindestens einen Kolbenstange ein Ausschieben des Produktes aus dem einen Produktrohr über dessen Auslauf und ein Aufnehmen des Produktes in das andere Produktrohr über dessen Einlauf erfolgt, und beim Ausschieben über den Auslauf das Produkt gegen einen Gegendruck der Homogenisierungseinrichtung derart gedrückt wird, dass ein Homogenisieren des Produktes erfolgt, **dadurch gekennzeichnet, dass** die Homogenisierungseinrichtung eine Kavitationseinrichtung (361) und die Kavitationseinrichtung eine Vakuumeinrichtung (365) aufweist, sodass am Auslass einer Entspannungskammer (363) der Kavitationseinrichtung mittels der Vakuumeinrichtung ein Vakuum beim Abpumpen des homogenisierten Produktes ansetzbar ist.

2. Vorrichtung nach Anspruch 1, **dadurch gekennzeichnet, dass** der doppeltwirkende Gleichlaufzylinder eine durchgehende Kolbenstange (105) oder zwei Kolbenstangen aufweist, wobei die beiden Kolbenstangen an gegenüberliegenden Seiten einer Kolbenfläche angeordnet sind.

3. Vorrichtung nach einem der vorherigen Ansprüche, **dadurch gekennzeichnet, dass** der doppeltwirkende Gleichlaufzylinder eine Hubfrequenz im Bereich von 3 bis 30 Hüben pro Minute, insbesondere 8 bis 12 Hüben pro Minute, bevorzugt mit 10 Hüben pro Minute aufweist.

4. Vorrichtung nach einem der vorherigen Ansprüche, **dadurch gekennzeichnet, dass** der doppeltwirkende Gleichlaufzylinder eine Hublänge von 800 mm bis 1.200 mm, bevorzugt von 1.000 mm, aufweist.

5. Vorrichtung nach einem der vorherigen Ansprüche, **dadurch gekennzeichnet, dass** der Einlauf mindestens ein Saugventil (123) und der Auslauf mindestens ein Druckventil (125) aufweisen.

6. Vorrichtung nach Anspruch 5, **dadurch gekennzeichnet, dass** das Saugventil und/oder das Druckventil einen Ventilkolben mit einer Druckbeaufschlagung und mit einem Durchlass auf einer Ventilinnenseite aufweist oder aufweisen, sodass bei Aufbringen eines Gegendruckes größer der Druckbeaufschlagung auf der Ventilinnenseite der Kolben mit dem Durchlass auf eine Ventilaußenseite verschoben wird.

7. Vorrichtung nach Anspruch 5 oder 6, **dadurch gekennzeichnet, dass** das Saugventil und/oder das Druckventil direkt am ersten Produktrohr (111) und/oder am zweiten Produktrohr (113) angeordnet ist oder sind.

8. Vorrichtung nach einem der Ansprüche 4 bis 7, **dadurch gekennzeichnet, dass** das jeweilige Saugventil (123) am und/oder im ersten Produktkolben (107) und/oder am und/oder im zweiten Produktkolben (109) angeordnet ist.

9. Vorrichtung nach einem der vorherigen Ansprüche, **dadurch gekennzeichnet, dass** die Homogenisierungseinrichtung ein Homogenisierungsventil (127) aufweist.

10. Vorrichtung nach Anspruch 9, **dadurch gekennzeichnet, dass** das Homogenisierungsventil eine Pralleinrichtung, insbesondere einen Prallring, aufweist, sodass durch ein Auftreffen des ausgeschobenen Produktes auf die Pralleinrichtung ein Homogenisieren und/oder ein Mischen erfolgt.

11. Vorrichtung nach einem der Anspruch 9 oder 10, **dadurch gekennzeichnet, dass** das Homogenisierungsventil als Druckventil ausgebildet ist, sodass das Homogenisierungsventil das jeweilige Druckventil ersetzt.

12. Vorrichtung nach einem der vorherigen Ansprüche, **dadurch gekennzeichnet, dass** die Vorrichtung eine Steuer- und/oder Regeleinrichtung aufweist.

13. Verwendung einer Vorrichtung nach einem der Ansprüche 1 bis 12 zum Homogenisieren eines Produktes, insbesondere eines Lebensmittels, sodass ein gleichmäßig homogenisiertes Produkt vorliegt.

14. Verwendung nach Anspruch 13, **dadurch gekennzeichnet, dass** das Produkt eine Flüssigkeit, eine Suspension und/oder eine Dispersion ist.

## Claims

1. Device (101) for homogenising a product, wherein the device has a hydraulic drive cylinder with at least one piston rod (105) and a homogenisation means (127), wherein in each case a product tube (111, 113) is arranged on either side of the hydraulic drive cylinder and in each case a product piston (107, 109) which is movable in the respective product tube is arranged at both ends of the at least one piston rod, each product tube comprises an inlet (115) and an outlet (117) for the product and the homogenisation means is arranged behind the two outlets, wherein the hydraulic drive cylinder is formed as a double-acting through-rod cylinder (103), so that the at least one piston rod is movable in the same manner in two opposite directions, wherein expulsion of the product out of the one product tube via the outlet thereof and receiving of the product in the other product tube via the inlet thereof takes place by a movement of the respective product piston by means of the at least one piston rod, and upon expulsion via the outlet the product is forced against a counter-pressure of the homogenisation means such that homogenisation of the product takes place, **characterised in that** the homogenisation means has a cavitation means (361) and the cavitation means has a vacuum means (365), so that at the exit from a pressure-relief chamber (363) of the cavitation means a vacuum can be applied by means of the vacuum means when pumping out the homogenised product.

2. Device according to claim 1, **characterised in that** the double-acting through-rod cylinder comprises a continuous piston rod (105) or two piston rods, wherein the two piston rods are arranged on opposite sides of a piston face.

3. Device according to one of the preceding claims, **characterised in that** the double-acting through-rod cylinder has a stroke frequency in the range of 3 to 30 strokes per minute, in particular 8 to 12 strokes per minute, preferably with 10 strokes per minute.

4. Device according to one of the preceding claims, **characterised in that** the double-acting through-rod cylinder has a stroke length of 800 mm to 1,200 mm, preferably of 1,000 mm.

5. Device according to one of the preceding claims, **characterised in that** the inlet comprises at least one suction valve (123) and the outlet comprises at least one pressure valve (125) .

6. Device according to claim 5, **characterised in that** the suction valve and/or pressure valve comprises or comprise a valve piston with a pressure application and with a passage on a valve interior, so that upon application of a counter-pressure greater than the pressure application on the valve interior the piston with the passage is displaced onto a valve exterior.

7. Device according to claim 5 or 6, **characterised in that** the suction valve and/or the pressure valve is or are arranged directly on the first product tube (111) and/or on the second product tube (113).

8. Device according to one of claims 4 to 7, **characterised in that** the respective suction valve (123) is arranged on and/or in the first product piston (107) and/or on and/or in the second product piston (109).

9. Device according to one of the preceding claims, **characterised in that** the homogenisation means comprises a homogenisation valve (127).

10. Device according to claim 9, **characterised in that** the homogenisation valve comprises a baffle means, in particular a baffle ring, so that homogenisation and/or mixing takes place by the expelled product striking the baffle means.

11. Device according to one of claims 9 or 10, **characterised in that** the homogenisation valve is formed as a pressure valve, so that the homogenisation valve replaces the respective pressure valve.

12. Device according to one of the preceding claims, **characterised in that** the device comprises a control and/or regulating means.

13. Use of a device according to one of claims 1 to 12 for homogenising a product, in particular a foodstuff, so that a uniformly homogenised product is produced.

14. Use according to claim 13, **characterised in that** the product is a liquid, a suspension and/or a dispersion.

## Revendications

1. Dispositif (101) d'homogénéisation d'un produit, dans lequel le dispositif présente un cylindre d'entraînement hydraulique avec au moins une tige de piston (105) et un système d'homogénéisation (127), dans lequel sont disposés de part et d'autre du cylindre d'entraînement hydraulique respectivement un tuyau pour produit (111, 113) et sur les deux extrémités de l'au moins une tige de piston respectivement un piston de produit (107, 109) pouvant être déplacé dans le tuyau pour produit respectif, chaque tuyau pour produit présente une entrée (115) et une sortie (117) pour le produit et le système d'homogénéisation est disposé derrière les deux sorties, dans lequel le cylindre d'entraînement hydraulique est réalisé en tant qu'un cylindre synchrone (103) à double action si bien que l'au moins une tige de piston peut être déplacée de manière similaire dans deux directions opposées, dans lequel une sortie par glissement du produit hors d'un tuyau pour produit par l'intermédiaire de sa sortie et une réception du produit dans l'autre tuyau pour produit par l'intermédiaire de son entrée ont lieu par un déplacement du piston de produit respectif au moyen de l'au moins une tige de piston, le produit est poussé, lors de la sortie par glissement par l'intermédiaire de la sortie, à l'encontre d'une contre-pression du système d'homogénéisation de telle manière qu'une homogénéisation du produit a lieu, **caractérisé en ce que** le système d'homogénéisation présente un système de cavitation (361) et le système de cavitation présente un système de production de vide (365) si bien qu'un vide peut être appliqué lors de l'évacuation par pompage du produit homogénéisé sur la sortie d'une chambre de détente (363) du système de cavitation au moyen du système de production de vide.

2. Dispositif selon la revendication 1, **caractérisé en ce que** le cylindre synchrone à double action présente une tige de piston (105) continue ou deux tiges de piston, dans lequel les deux tiges de piston sont disposées sur des côtés se faisant face d'une face de piston.

3. Dispositif selon l'une quelconque des revendications précédentes, **caractérisé en ce que** le cylindre synchrone à double action présente une fréquence de courses dans la plage de 3 à 30 courses par minute, en particulier 8 à 12 courses par minute, de manière préférée avec 10 courses par minute.

4. Dispositif selon l'une quelconque des revendications précédentes, **caractérisé en ce que** le cylindre synchrone à double action présente une longueur de course de 800 mm à 1200 mm, de manière préférée de 1000 mm.

5. Dispositif selon l'une quelconque des revendications précédentes, **caractérisé en ce que** l'entrée présente au moins une soupape d'aspiration (123) et la sortie présente au moins une soupape de pression (125).

6. Dispositif selon la revendication 5, **caractérisé en ce que** la soupape d'aspiration et/ou la soupape de pression présente ou présentent un piston de soupape soumis à l'action d'une pression et avec un passage sur un côté intérieur de soupape si bien que lors de l'application d'une contre-pression supérieure à la pression exercée sur le côté intérieur de soupape, le piston avec le passage est coulissé sur un côté extérieur de soupape.

7. Dispositif selon la revendication 5 ou 6, **caractérisé en ce que** la soupape d'aspiration et/ou la soupape de pression est ou sont disposées directement sur le premier tuyau pour produit (111) et/ou sur le deuxième tuyau pour produit (113).

8. Dispositif selon l'une quelconque des revendications 4 à 7, **caractérisé en ce que** la soupape d'aspiration (123) respective est disposée sur et/ou dans le premier piston de produit (107) et/ou sur et/ou dans le deuxième piston de produit (109).

9. Dispositif selon l'une quelconque des revendications précédentes, **caractérisé en ce que** le système d'homogénéisation présente une soupape d'homogénéisation (127).

10. Dispositif selon la revendication 9, **caractérisé en ce que** la soupape d'homogénéisation présente un système de rebondissement, en particulier un anneau de rebondissement si bien qu'une homogénéisation et/ou un mélange ont lieu du fait d'une arrivée du produit sorti par glissement sur le système de rebondissement.

11. Dispositif selon l'une quelconque des revendications 9 ou 10, **caractérisé en ce que** la soupape d'homogénéisation est réalisée en tant que soupape de pression si bien que la soupape d'homogénéisation remplace la soupape de pression respective.

12. Dispositif selon l'une quelconque des revendications précédentes, **caractérisé en ce que** le dispositif présente un système de commande et/ou de régulation.

13. Utilisation d'un dispositif selon l'une quelconque des revendications 1 à 12 pour homogénéiser un produit, en particulier une denrée alimentaire si bien qu'un produit homogénéisé de manière homogène est disponible.

14. Utilisation selon la revendication 13, **caractérisée en ce que** le produit est un liquide, une suspension et/ou une dispersion.
